(19) Europäisches Patentamt / European Patent Office / Office européen des brevets

(11) **EP 1 594 103 B1**

(12) **FASCICULE DE BREVET EUROPEEN**

(45) Date de publication et mention
de la délivrance du brevet:
**21.11.2012 Bulletin 2012/47**

(51) Int Cl.:
***G09B 9/042*** *(2006.01)*

(21) Numéro de dépôt: **05364014.0**

(22) Date de dépôt: **19.04.2005**

(54) **Dispositif de simulation de perte d'adhérence pour véhicule automobile**

Vorrichtung zur Simulation des Haftungsverlusts eines Kraftfahrzeuges

Adhesion loss simulation system for automobile vehicle

(84) Etats contractants désignés:
**AT BE BG CH CY CZ DE DK EE ES FI FR GB GR HU IE IS IT LI LT LU MC NL PL PT RO SE SI SK TR**

(30) Priorité: **05.05.2004 FR 0404851**

(43) Date de publication de la demande:
**09.11.2005 Bulletin 2005/45**

(73) Titulaire: **Gaboriau, Benoit**
**35580 Guichen (FR)**

(72) Inventeur: **Gaboriau, Benoit**
**35580 Guichen (FR)**

(74) Mandataire: **Vidon, Patrice**
**Cabinet Vidon**
**Technopole Atalante**
**16B Rue de Jouanet**
**BP 90333**
**35703 Rennes Cedex 7 (FR)**

(56) Documents cités:
**FR-A1- 2 680 593     US-A- 4 998 594**
**US-A- 6 024 381**

• **PATENT ABSTRACTS OF JAPAN vol. 018, no. 413 (M-1649), 3 août 1994 (1994-08-03) & JP 06 122301 A (HONDA MOTOR CO LTD), 6 mai 1994 (1994-05-06)**

## Description

### 1. Domaine de l'invention

Le domaine de l'invention est celui de l'automobile, et notamment de l'apprentissage et du perfectionnement de la conduite dans des conditions difficiles, ou encore du test et de la mise au point de véhicules dans de telles conditions.

Plus précisément, l'invention concerne les dispositifs permettant de simuler une perte d'adhérence d'un véhicule automobile. Ces dispositifs sont notamment utilisés par les établissements d'enseignement de la conduite automobile dispensant notamment des cours de perfectionnement permettant de mettre les conducteurs dans des situations délicates et notamment en situations de perte d'adhérence (aquaplaning, dérapage sur verglas ou sur neige...).

### 2. Solutions de l'art antérieur

Ces dispositifs se présentent sous la forme d'un sabot, dans lequel se place une roue du véhicule, qui se trouve alors surélevée, de façon qu'elle ne soit plus en contact avec le sol. Le sabot est muni de roulettes, qui confèrent une adhérence précaire, par rapport à la roue elle-même, et permettent de simuler de façon relativement efficace une mauvaise adhérence. Un tel dispositif équipant les roues arrières d'un véhicule est décrit plus précisément dans le document de brevet français n° FR 2 680 593.

Selon l'art antérieur, un autre dispositif, connu sous le nom de « skid car » en anglais, pour « voiture de dérapage en français », permet également de simuler une perte d'adhérence, en réglant la friction entre les roues d'un véhicule et la surface de roulement. Ce dispositif, notamment décrit dans le brevet US 4, 998, 594, comprend notamment un châssis, que l'on place sous le véhicule, de sorte à soulever entièrement le véhicule.

D'autres techniques de l'art antérieur consistent encore à remplacer les roues, généralement arrières, d'un véhicule par un dispositif comprenant une béquille de support, et une roulette, la roulette portant sur le sol lorsque le véhicule est équilibré sur ses autres roues. Un tel dispositif est notamment décrit dans le brevet français n° FR 2 619 649.

Il est également connu du document JP 06 122301 un système composé d'un flasque qui se fixe sur les roues à l'aide de vis spéciales qui s'adaptent dans les trous de montage de la roue. Le flasque est équipé de billes sur sa périphérie. Lors de la rotation de la roue, la force centrifuge des billes permet de soulever la roue et donc de diminuer son adhérence, provoquant ainsi une situation de faible adhérence.

### 3. Inconvénients de l'art antérieur

Un inconvénient de ces techniques de l'art antérieur est qu'elles ne sont adaptables que sur des véhicules à traction. Leur utilisation reste en conséquence inaccessible à un certain nombre de véhicules à propulsion. De même, les systèmes connus ne sont pas compatibles avec les systèmes électroniques équipant les véhicules, par exemple pour empêcher le blocage des roues ou le patinage.

Un autre inconvénient de ces techniques de l'art antérieur est que le montage des sabots (un sur chaque roue d'un train), ou d'un châssis est complexe. Notamment, le montage d'un châssis sous un véhicule condamne le véhicule équipé à ce seul usage.

Ces techniques de l'art antérieur ont encore l'inconvénient de ne pas permettre de restituer de façon fidèle un phénomène de roulis d'une caisse.

Un autre inconvénient des techniques de l'art antérieur est qu'elles nécessitent le démontage de certains organes d'un véhicule qu'elles équipent et plus particulièrement celui des roues.

Ces techniques de l'art antérieur ont encore pour inconvénient de ne pas pouvoir simuler différents états de la route sur laquelle circule un véhicule.

Encore un autre inconvénient des techniques de l'art antérieur réside dans le fait qu'elles sont encombrantes et coûteuses.

### 4. Objectifs de l'invention

L'invention a notamment pour objectif de pallier ces inconvénients de l'art antérieur.

Plus précisément, un objectif de l'invention est de fournir un dispositif de simulation de perte d'adhérence pour véhicule automobile adaptable à tout véhicule, qu'il soit à propulsion, à traction ou à transmission intégrale, et qu'il soit équipé de l'ABS (« *Anti-lock Brake System* » en anglais ou *« système de freinage antiblocage »*) et/ou de l'ESP (« *Electronic Stability Program* » en anglais ou *« dispositif électronique de stabilité programmé »*), ou de tout autre dispositif électronique d'assistance au pilotage dont le fonctionnement peut être perturbé en cas d'absence totale d'adhérence des roues d'un véhicule sur le sol.

Un autre objectif de l'invention est de fournir un tel dispositif qui soit adaptable à tout véhicule, notamment en termes de dimension de roue.

Un autre objectif de l'invention est de permettre un montage simplifié d'un tel dispositif, qui puisse être adapté sur un véhicule sans démontage d'organes de fonctionnement.

Encore un autre objectif de l'invention est de fournir un tel dispositif qui permette de simuler une perte d'adhérence d'un véhicule, sans pour autant perturber le comportement de la caisse.

L'invention a encore pour objectif de proposer un tel dispositif qui permette de simuler différents états du sol sur lequel roule un véhicule.

Un autre objectif de l'invention est de fournir un tel dispositif qui permette de simuler un survirage ou un sous-virage.

Enfin, un objectif de l'invention est de fournir un tel dispositif qui soit simple à mettre en oeuvre et économique, et dont le retour sur investissement s'inscrive sur une période relativement courte.

## 5. Caractéristiques essentielles de l'invention

Ces objectifs, ainsi que d'autres qui apparaîtront par la suite, sont atteints à l'aide d'un dispositif de simulation de perte d'adhérence pour véhicule automobile selon la revendication 1.

Ainsi, l'invention repose sur une approche tout à fait nouvelle et inventive de simulation de perte d'adhérence pour véhicule automobile permettant de faire varier la valeur du coefficient d'adhérence existant entre une roue d'un véhicule et la surface de roulement sur laquelle il circule. En effet, la roue reste en contact avec le sol, mais l'importance de ce contact est réglable.

La variation du niveau d'adhérence est obtenue en diminuant l'effort engendré par la surface de roulement sur une roue de façon à réduire l'écrasement d'un pneu monté sur cette roue, et donc la surface de contact entre cette roue et la surface de roulement. Ce résultat est obtenu en utilisant le dispositif selon l'invention permettant notamment de régler la distance séparant l'axe de rotation d'une roue et le niveau du sol sur lequel elle roule.

Selon un premier mode de réalisation, ledit dispositif est conçu de façon que ladite roue présente une zone de contact restant en contact avec ladite surface de roulement.

Un niveau d'adhérence minimum pouvant être maintenu entre la roue et la surface de roulement avec laquelle elle est en contact, il est possible d'adapter un tel dispositif sur tout type de véhicule, qu'il soit à traction, à propulsion, à transmission intégrale, et qu'il soit doté de dispositifs électroniques d'aide au pilotage (ABS, ESP, ...).

Avantageusement, lesdits moyens de réglage permettent de faire varier la surface de ladite zone de contact.

Il est donc possible de simuler plusieurs niveaux distincts d'adhérence entre ladite roue et ladite surface de roulement respectivement, représentatifs de différents types de surfaces de roulement sur lesquelles circule ledit véhicule (glace, neige, pluie, boue, gravillons, asphalte, terre, ...).

Préférentiellement, lesdits moyens de réglage permettent de faire varier la position en hauteur de l'axe de rotation de ladite roue par rapport à ladite surface de roulement.

La force normale exercée par ladite surface de roulement sur ladite roue peut donc prendre des valeurs différentes, et le taux d'écrasement de ladite roue sur ladite surface de roulement est variable. La capacité d'adhérence de ladite roue sur ladite surface de roulement étant proportionnelle à ladite surface de contact, il est possible de simuler différents niveaux d'adhérence et donc différents états de la surface de roulement.

De manière avantageuse, lesdits moyens de réception présentent deux éléments de support, contre lesquels ladite roue vient en appui, et des moyens de modification de l'empattement entre lesdits deux éléments de support.

Cette variation de l'empattement entre lesdits deux éléments de support permet de modifier la hauteur de l'axe de rotation de ladite roue par rapport à ladite surface de roulement ce qui engendre une variation de la surface de ladite zone de contact.

Notamment, lesdits éléments de support sont deux cylindres libres en rotation et dont les axes de rotation sont parallèles à l'axe de rotation de ladite roue.

Ainsi, ces cylindres n'altèrent pas la rotation de ladite roue.

De manière préférentielle, lesdits moyens de réglage comprennent au moins une glissière le long de laquelle au moins un desdits éléments de support peut être déplacé.

Ladite glissière permet donc de faire varier la valeur de l'empattement entre lesdits deux cylindres.

Selon un second mode de réalisation, ledit dispositif comprend des moyens de modification d'au moins une caractéristique de roulement d'au moins un desdits moyens de roulement.

Notamment, l'une desdites caractéristiques est un couple résistant, s'opposant à la rotation.

La simulation de niveaux distincts d'adhérence de ladite roue sur ladite surface de roulement peut alors être obtenue sans nécessairement faire varier la surface de ladite zone de contact.

Préférentiellement, lesdits moyens de modification d'au moins une caractéristique de roulement agissent sur au moins un axe de rotation d'une roulette desdits moyens de roulement, par rapport audit sabot.

Avantageusement, lesdits moyens de modification agissent sur les caractéristiques de torsion dudit axe, en utilisant un axe réalisé dans un matériau appartenant au moins à l'une des familles suivantes :

- matériaux élastomères ;
- matériaux magnéto-rhéologiques ;
- matériaux électro-rhéologiques.

De façon préférentielle, ledit dispositif comprend des moyens réglables de guidage latéral comprenant au moins un rouleau et/ou une bille et/ou un épaulement de maintien, localisé en regard d'au moins un des flancs de ladite roue, de façon à s'adapter à plusieurs largeurs de roue.

Ces moyens réglables de guidage latéral comprennent par exemple deux éléments, localisés en regard de chacun des flancs d'une roue, qui présentent un écartement réglable.

Le risque de déchaussage, c'est-à-dire le risque que ladite roue quitte ledit sabot, est par conséquent fortement limité. De plus, ledit dispositif peut être adapté à des véhicules automobiles pourvus de roues de différentes dimensions, et notamment de différentes largeurs.

Avantageusement, le dispositif comprend des moyens de mesure d'au moins une information représentative d'un niveau d'adhérence de la roue sur la surface de roulement.

On peut ainsi connaître avec précision les conditions de roulage qui sont reproduites.

## 6. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :

- la figure 1 illustre une vue intérieure, c'est-à-dire une vue du flanc non visible d'une roue d'un véhicule sur laquelle est monté un dispositif de simulation de perte d'adhérence pour véhicule automobile selon l'invention ;
- la figure 2 illustre une vue extérieure d'un dispositif selon l'invention monté sur une roue d'un véhicule ;
- la figure 3A présente une vue de dessus du montage illustré aux figures 1 et 2 d'un dispositif sur une roue d'un véhicule ;
- la figure 3B présente une variante de réalisation des moyens réglables de guidage latéral d'un dispositif selon l'invention.

## 7. Description d'un mode de réalisation de l'invention

Comme indiqué précédemment, le principe général de l'invention consiste à simuler une perte d'adhérence d'un véhicule obtenue en modifiant le niveau d'adhérence entre les roues du véhicule et la surface sur laquelle il roule. Pour cela, on place au moins deux roues d'un véhicule dans deux sabots du dispositif de l'invention distincts permettant de régler la hauteur de l'axe des roues par rapport au niveau du sol. On fait ainsi varier la surface de contact d'un pneu équipant chaque roue avec la surface de roulement sur laquelle circule le véhicule (neige, glace, pluie, terre, gravillon,...), et donc la valeur du coefficient d'adhérence entre le pneu et la surface de roulement.

Dans l'ensemble du présent document, on englobe dans l'appellation roue la jante et le pneu monté sur celle-ci.

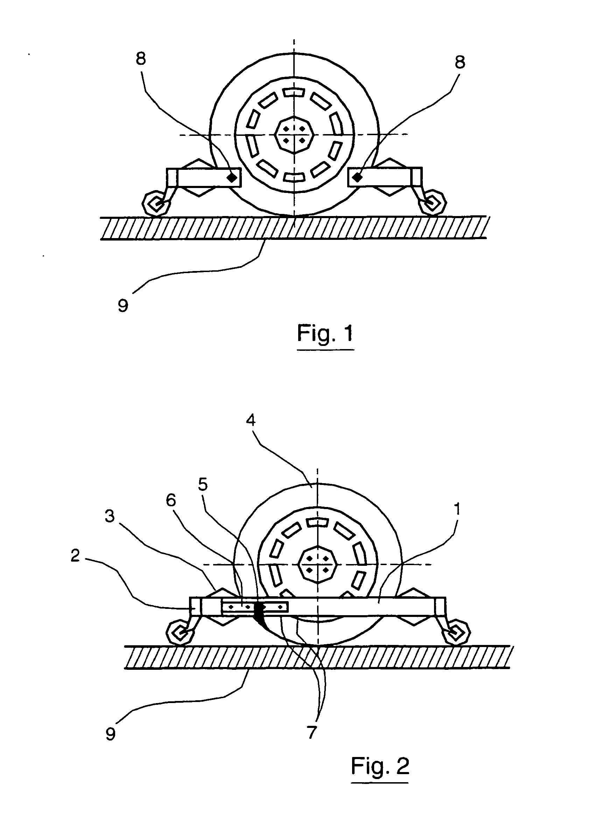

En référence aux figures 1 et 2, le dispositif de simulation de perte d'adhérence pour véhicule automobile comprend un châssis 1. Ce châssis 1 est une structure de type mécano soudée d'un ensemble de tubes de section carrée ou circulaire, par exemple. Toute autre forme ou mode de fabrication pourront être mis en oeuvre afin de réaliser ledit châssis 1.

Deux cylindres 3, dont les axes de rotation sont parallèles à l'axe de rotation de la roue 4, sont fixés sur le châssis et sont libres en rotation. Ces deux cylindres 3 sont placés de chaque côté dudit châssis de sorte que la bande de roulement de la roue 4 vient en appuis sur ces deux cylindres 3, encore appelés éléments de support.

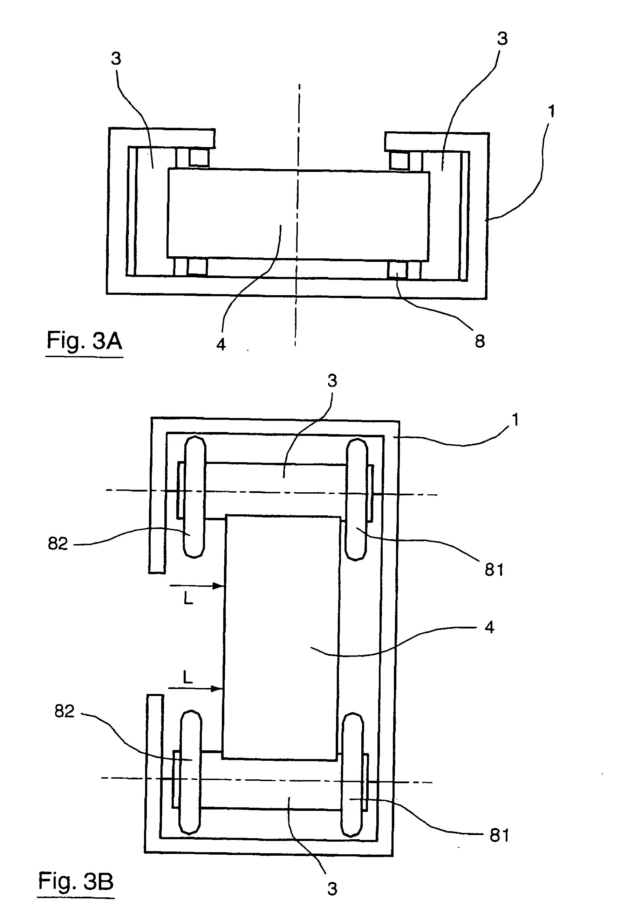

La figure 3A laisse apparaître quatre moyens réglables 8 de guidage latéral de la roue 4. Ces moyens réglables 8 de guidage latéral mettent en oeuvre, par exemple, des rouleaux ou des billes de maintien sur lesquels viennent en appui les flancs intérieur et extérieur de la roue 4. Ils permettent d'éviter le déchaussage de la roue 4 (perte du simulateur de perte d'adhérence) sans pour autant nuire à sa rotation.

On présente également en relation avec la figure 3B une variante de réalisation des moyens réglables 8 de guidage latéral de la roue 4.

Selon cette variante de réalisation, les moyens réglables 8 de guidage latéral comprennent deux éléments : un premier élément 81 formant un épaulement et un second élément mobile 82 pouvant se déplacer suivant une direction sensiblement parallèle à l'axe du cylindre (flèche L), permettant de maintenir la roue 4. Ces épaulements 81 et 82 présentent ainsi un écartement réglable.

Ces premier et second éléments 81 et 82 permettent ainsi l'adaptation du dispositif de simulation à des roues de largeurs différentes.

Ces éléments 81 et 82 peuvent également être mobiles en rotation, de sorte à maintenir latéralement la roue 4 sans nuire à sa rotation, et éventuellement liés au cylindre 3 en fonctionnement.

D'autres formes ou modes de réalisation des moyens réglables 8 du guidage latéral de la roue 4 peuvent également être mis en oeuvre.

À nouveau en référence aux figures 1 et 2, le châssis 1 repose sur quatre roulettes 2 libres en rotation autour de leurs axes vertical et horizontal. Ces roulettes 2 sont positionnées à chaque extrémité du châssis 1. Ces roulettes 2 sont liées au châssis 1 par une liaison pivot. Cette liaison pivot peut mettre en oeuvre des roulements à billes, des roulements à rouleaux, des aiguilles ou tout autre composant mécanique permettant d'assurer le guidage en rotation d'un arbre ou d'un axe.

L'empattement entre les cylindres 3 est réglé à l'aide d'une liaison glissière 7, manoeuvrée par une manette de réglage 5. Il est tout à fait possible d'avoir recours à un vérin pour opérer au réglage de la glissière 7. La glissière pourra être composée par un ensemble de type queue d'aronde. Il pourra encore s'agir d'un patin glissant le long d'un rail prévu à cet effet. Plus simplement elle pourra consister à faire coulisser deux portions du châssis 1 ayant une section de forme identique (carré, circulaire,...) mais dont l'une à des dimensions légèrement inférieures à l'autre de sorte qu'elle peut coulisser à l'intérieur. Une fois l'empattement entre les deux rouleaux 3 réglé pour l'adhérence voulue, l'écartement est maintenu par un moyen mécanique (non représenté), notamment une clavette, une goupille, un ensemble boulon avec écrou et contre-écrou. Tout autre moyen n'est pas exclu.

Ce réglage de l'empattement entre les cylindres 3 permet de modifier la hauteur de l'axe de la roue 4 par rapport au niveau du sol 9. La capacité d'adhérence de la roue 4 sur le sol 9 étant proportionnelle à la surface de contact entre la roue 4 et le sol 9 ou à la force normale exercée sur la roue 4 par le sol 9, le réglage de la hauteur de l'axe de la roue 4 permet de soulager la roue en répartissant une partie des efforts sur le dispositif de simulation. Ce soulagement permet de réduire l'écrasement de la roue et donc la surface de contact entre la roue 4 et le sol 9, favorisant ainsi la perte d'adhérence. Il est donc possible de régler la perte d'adhérence en jouant sur l'écartement des cylindres 3 sur lesquels la roue 4 est en appui. Ces différents niveaux d'adhérence permettent de simuler le passage d'un véhicule sur différents types de surface de roulement et notamment, les surfaces recouvertes de neige, de glace, de pluie, de terre, de gravillons...

Pour faciliter le réglage du niveau d'adhérence, il est possible d'équiper le simulateur de moyens de mesure d'une information représentative du niveau d'adhérence, mettant notamment en oeuvre des capteurs de poids.

Ces capteurs de poids sont par exemple positionnés au niveau des moyens de réception de la roue 4 (cylindres 3), des moyens de guidage latéral de la roue 4 (rouleau, billes ou épaulements 81 et 82) ou des moyens de roulement (roulettes 2).

L'information provenant des capteurs permet ainsi de mesurer le poids F supporté par le simulateur de perte d'adhérence sur lequel vient se positionner la roue 4, en fonction du poids P du véhicule au niveau de la roue 4, soit encore le soulagement de la roue 4 en contact avec le sol 9.

Ainsi, par exemple, on aura :

- F = P une adhérence nulle, proche du verglas ;

- $F = \dfrac{3}{4}P$ une adhérence similaire à de la boue ou de la neige ;

- $F = \dfrac{1}{2}P$ une adhérence similaire à une route mouillée, asphalte lisse ;

- F = 0 une adhérence normale.

Un utilisateur connaît ainsi immédiatement le niveau d'adhérence entre la route et la roue 4, et donc les conditions de roulage reproduites.

L'information provenant des capteurs peut notamment être donnée à l'utilisateur via un petit afficheur.

Ce système de capteurs s'adapte facilement au cas où l'empattement des cylindres 3 est réalisé par un système vis-écrou, ou encore par un système à cliquet.

Ce dispositif de simulation de perte d'adhérence pour véhicule automobile permettant de faire varier l'adhérence entre les roues d'un véhicule et la route tout en conservant un niveau d'adhérence minimal, il est possible d'équiper tous les types de véhicules, qu'ils soient à traction, à propulsion ou à transmission intégrale et équipés de l'ABS ou de l'ESP (puisque la roue reste en contact avec le sol).

Le châssis 1 est également muni de moyens de réglage (non représentés) de la distance séparant les moyens réglables 8 de guidage latéral. Il est de ce fait possible d'adapter ledit dispositif de simulation de perte d'adhérence pour véhicule automobile à des véhicules équipés de roues de différentes largeurs.

Dans un autre mode de réalisation de l'invention, les roulettes 2 sont montées sur des axes élastiques (non rigide). Il peut notamment s'agir de barre de torsion ou d'axe réalisés dans un matériau élastomère. Il est alors possible de simuler des différences d'adhérence en jouant sur la raideur de la liaison élastique. Il est également envisageable d'utiliser un matériau électro-rhéologique ou magnéto-rhéologique. Dans ce cas, une commande électrique par fil ou par voie hertzienne, placée à l'intérieur d'un véhicule ou dans un pupitre de commande, peut permettre de faire varier à distance la raideur du matériau, et donc le niveau d'adhérence entre le véhicule et le sol sur lequel il circule. Cette technique permet notamment de limiter l'usure au niveau des pneumatiques du véhicule et donc de réduire les frais d'exploitation des organismes utilisant ce type de dispositifs.

Un troisième mode de réalisation consiste à utiliser les deux premiers mode de réalisation de façon combinée. Il est ainsi possible, en jouant à la fois sur l'empattement entre les cylindres 3 et sur la raideur des axes des roulettes 2, d'affiner le choix de l'adhérence existant entre une roue et le sol et de faciliter la simulation de différents états de surface d'une route (pluie, boue, neige, glace, terre, ...).

Le dispositif décrit permet donc de simuler une perte d'adhérence d'un véhicule en simulant une variation du niveau d'adhérence entre les roues d'un véhicule et la surface de roulement sur laquelle il circule. Ce dispositif peut être monté sur tout type de véhicule, quel que soit son mode de transmission (traction, propulsion, transmission intégrale) et les équipements électroniques d'assistance au pilotage relatifs au contrôle du freinage et au contrôle de trajectoire dont il est pourvu.

Le montage d'un jeu de sabots sur le train arrière d'un véhicule à traction ou à propulsion permet notamment de simuler un survirage. Le montage d'un jeu dudit dispositif sur le train arrière et sur le train avant d'un véhicule à propulsion ou à traction, ou d'un véhicule à transmission intégrale permet notamment de simuler un sous virage.

## Revendications

1. Dispositif de simulation de perte d'adhérence pour véhicule automobile, comprenant au moins un sabot muni de moyens de roulement (2) en contact avec une surface de roulement (9), et présentant des moyens de réception d'une roue (4) du véhicule, **caractérisé en ce que** lesdits moyens de réception présentent deux éléments de support (3), contre lesquels ladite roue (4) vient en appui, et **en ce que** ledit sabot comprend des moyens de réglage permettant de simuler au moins deux niveaux distincts d'adhérence de ladite roue (4) sur ladite surface de roulement (9), en modifiant l'empattement entre lesdits deux éléments de support (3), ladite roue (4) présentant une zone de contact restant en contact avec ladite surface de roulement (9).

2. Dispositif selon la revendication 1, **caractérisé en ce que** lesdits moyens de réglage permettent de faire varier la surface de ladite zone de contact.

3. Dispositif selon la revendication 2, **caractérisé en ce que** lesdits moyens de réglage permettent de faire varier la position en hauteur de l'axe de rotation de ladite roue (4) par rapport à ladite surface de roulement (9).

4. Dispositif selon l'une quelconque des revendications 1 à 3, **caractérisé en ce que** lesdits éléments de support (3) sont deux cylindres libres en rotation et dont les axes de rotation sont parallèles à l'axe de rotation de ladite roue.

5. Dispositif selon l'une quelconque des revendications 1 à 4, **caractérisé en ce que** lesdits moyens de réglage comprennent au moins une glissière (7) le long de laquelle au moins un desdits éléments de support (3) peut être déplacé.

6. Dispositif selon l'une quelconque des revendications 1 à 5, **caractérisé en ce qu'**il comprend des moyens de modification d'au moins une caractéristique de roulement d'au moins un desdits moyens de roulement (2).

7. Dispositif selon la revendication 6, **caractérisé en ce que** l'une desdites caractéristiques est un couple résistant, s'opposant à la rotation.

8. Dispositif selon l'une quelconque des revendications 6 et 7, **caractérisé en ce que** lesdits moyens de modification d'au moins une caractéristique de roulement agissent sur au moins un axe de rotation d'une roulette desdits moyens de roulement (2), par rapport audit sabot.

9. Dispositif selon la revendication 8, **caractérisé en ce que** lesdits moyens de modification agissent sur les caractéristiques de torsion dudit axe, en utilisant un axe réalisé dans un matériau appartenant au moins à l'une des familles suivantes :

   - matériaux élastomères ;
   - matériaux magnéto-rhéologiques ;
   - matériaux électro-rhéologiques.

10. Dispositif selon l'une quelconque des revendications 1 à 9, **caractérisé en ce qu'**il comprend des moyens réglables de guidage latéral (8) comprenant au moins un rouleau et/ou une bille et/ou un épaulement de maintien, localisé en regard d'au moins un des flancs de ladite roue (4), de façon à s'adapter à plusieurs largeurs de roue.

11. Dispositif selon l'une quelconque des revendications 1 à 10, **caractérisé en ce qu'**il comprend des moyens de mesure d'au moins une information représentative d'un niveau d'adhérence de ladite roue (4) sur ladite surface de roulement (9).

## Claims

1. A device for simulating loss of adhesion for a motor vehicle, comprising at least one shoe which is provided with travel means (2) that are in contact with a travel surface (9) and which has means for receiving a wheel (4) of the vehicle, **characterised in that** the receiving means have two support elements (3) against which the wheel (4) is in abutment, and **in that** the shoe comprises adjustment means which allow simulation of at least two different levels of adhesion of the wheel (4) to the travel surface (9) by modifying the spacing between the two support elements (3), the wheel (4) having a contact zone which remains in contact with the travel surface (9).

2. A device according to claim 1, **characterised in that** the adjustment means allow the surface of the contact zone to be varied.

3. A device according to claim 2, **characterised in that** the adjustment means allow the position of the rotation axis of the wheel (4) relative to the travel surface (9) to be varied in terms of height.

4. A device according to any one of claims 1 to 3, **characterised in that** the support elements (3) are two cylinders which can rotate freely and whose rotation axes are parallel with the rotation axis of the wheel.

5. A device according to any one of claims 1 to 4, **characterised in that** the adjustment means comprise at least one sliding member (7) along which at least one of the support elements (3) can be moved.

6. A device according to any one of claims 1 to 5, **characterised in that** it comprises means for modifying at least one travel characteristic of at least one of the travel means (2).

7. A device according to claim 6, **characterised in that** one of the characteristics is a resistant torque which counteracts the rotation.

8. A device according to either claim 6 or claim 7, **characterised in that** the means for modifying at least one travel characteristic act on at least one rotation axle of a small wheel of the travel means (2), relative to the shoe.

9. A device according to claim 8, **characterised in that** the modification means act on the torsion characteristics of the axle, by using an axle produced from a material which belongs to at least one of the following families:

   - elastomer materials;
   - magnetorheological materials,
   - electrorheological materials.

10. A device according to any one of claims 1 to 9, **characterised in that** it comprises adjustable lateral guiding means (8) which comprise at least one roller and/or a ball and/or a retention shoulder which is located opposite at least one of the sides of the wheel (4) in order to adapt to a plurality of widths of a wheel.

11. A device according to any one of claims 1 to 10, **characterised in that** it comprises means for measuring at least one item of information which is representative of a level of adhesion of the wheel (4) to the travel surface (9).


**Patentansprüche**

1. Vorrichtung zur Simulation des Haftungsverlusts eines Kraftfahrzeugs, die mindestens einen Schlitten umfasst, der mit Rollmitteln (2) versehen ist, die mit einer Rollfläche (9) in Berührung sind, und Mittel zur Aufnahme eines Rads (4) des Fahrzeugs aufweist, **dadurch gekennzeichnet, dass** die Aufnahmemittel zwei Tragelemente (3) aufweisen, gegen die das Rad (4) in Auflage kommt, und dadurch, dass der Schlitten Einstellmittel umfasst, die das Simulieren von mindestens zwei unterschiedlichen Haftungsgraden des Rades (4) auf der Rollfläche (9) durch Ändern des Achsabstands zwischen den zwei Tragelementen (3) ermöglichen, wobei das Rad (4) einen Berührungsbereich aufweist, der mit der Rollfläche (9) in Berührung bleibt.

2. Vorrichtung nach Anspruch 1, **dadurch gekennzeichnet, dass** die Einstellmittel das Variieren der Fläche des Berührungsbereichs ermöglichen.

3. Vorrichtung nach Anspruch 2, **dadurch gekennzeichnet, dass** die Einstellmittel das Variieren der Höhenposition der Drehachse des Rades (4) in Bezug auf die Rollfläche (9) ermöglichen.

4. Vorrichtung nach einem der Ansprüche 1 bis 3, **dadurch gekennzeichnet, dass** die Tragelemente (3) zwei Zylinder sind, die frei drehbar sind und deren Drehachsen parallel zur Drehachse des Rades sind.

5. Vorrichtung nach einem der Ansprüche 1 bis 4, **dadurch gekennzeichnet, dass** die Einstellmittel mindestens eine Gleitführung (7) umfassen, entlang der mindestens eines der Tragelemente (3) versetzt werden kann.

6. Vorrichtung nach einem der Ansprüche 1 bis 5, **dadurch gekennzeichnet, dass** sie Mittel zur Änderung von mindestens einer Rolleigenschaft von mindestens einem der Rollmittel (2) umfasst.

7. Vorrichtung nach Anspruch 6, **dadurch gekennzeichnet, dass** eine der Eigenschaften ein der Drehung entgegenwirkendes Widerstandsmoment ist.

8. Vorrichtung nach einem der Ansprüche 6 und 7, **dadurch gekennzeichnet, dass** die Mittel zur Änderung von mindestens einer Rolleigenschaft in Bezug zum Schlitten auf mindestens eine Drehachse einer Rolle der Rollmittel (2) einwirken.

9. Vorrichtung nach Anspruch 8, **dadurch gekennzeichnet, dass** die Änderungsmittel auf die Torsionseigenschaften der Achse einwirken, indem eine Achse verwendet wird, die aus einem Material ausgeführt ist, das zu mindestens einer der folgenden Familien gehört:

   - Elastomermaterialien;
   - magnetorheologische Materialien;
   - elektrorheologische Materialien.

10. Vorrichtung nach einem der Ansprüche 1 bis 9, **dadurch gekennzeichnet, dass** sie einstellbare Seitenführungsmittel (8) umfasst, die mindestens eine Walze und/oder Kugel und/oder eine Halteschulter umfassen, die sich der mindestens einen der Seiten des Rades (4) gegenüberstehend befindet, derart, dass sie sich an mehrere Radbreiten anpasst.

11. Vorrichtung nach einem der Ansprüche 1 bis 10, **dadurch gekennzeichnet, dass** sie Mittel zur Messung von mindestens einer Information umfasst, die für einen Haftungsgrad des Rades (4) auf der Rollfläche (9) charakteristisch ist.

8

8

9

Fig. 1

4

5

6

3

2

1

9

7

Fig. 2

Fig. 3A

Fig. 3B

**EP 1 594 103 B1**

## RÉFÉRENCES CITÉES DANS LA DESCRIPTION

**Documents brevets cités dans la description**

- FR 2680593
- US 4998594 A
- FR 2619649
- JP 6122301 A